# EUROPEAN PATENT SPECIFICATION

(11) **EP 2 672 524 B1**
(45) Date of publication and mention of the grant of the patent: **30.10.2019**
(21) Application number: 12741580.0
(22) Date of filing: 30.01.2012
(51) Int. Cl.: H02S 30/10

(54) **SOLAR CELL MODULE**
SOLARZELLENMODUL
MODULE DE CELLULE SOLAIRE

(30) Priority: 31.01.2011 JP 2011017451
(43) Date of publication of application: 11.12.2013
(73) Proprietor: Kyocera Corporation, Kyoto-shi, Kyoto-fu 612-8501 (JP)
(72) Inventor: YAMASHITA, Mitsuo, Kyoto 6128501 (JP); TODA, Kazuhide, Kyoto 6128501 (JP); SUMIDA, Ken-ichiro, Kyoto 6128501 (JP)
(74) Representative: Viering, Jentschura & Partner mbB Patent- und Rechtsanwälte
(86) International application number: PCT/JP2012/051988
(87) International publication number: WO 2012/105494

(56) References cited:
- WO-A1-2010/013691
- WO-A1-2010/013691
- WO-A1-2010/061878
- JP-A- 9 148 612
- JP-A- 10 294 485
- JP-U- H0 289 856
- US-B1- 6 207 896

## Description

### Technical Field

The present invention relates to a solar cell module according to the preamble of claim 1.

### Background Art

A solar cell module of the aforementioned type is described in WO 2010/061878 A1, for example.

In response to a recent growing trend of environmental protection, photovoltaic power generating systems, which cause less environmental loads, are attracting much attention. To more spread the use of these photovoltaic power generating systems, there is a need to increase the productivity of solar cell modules, which are part of a photovoltaic power generating system.

A means for increasing the productivity of the solar cell module is to enlarge the solar cell module. When the solar cell module is enlarged, the number of manufacturing man-hours per unit area and the like can be reduced. Since a large solar cell module takes a large area, however, it receives a large wind load and a large snow load and is thereby likely to be damaged.

To solve this problem, it is proposed to place a reinforcing member, in a rectangular columnar shape, that supports the central portion of the solar cell module (see Japanese Unexamined Patent Application Publication No. 2009-57757, for example).

### Summary of Invention

### Technical Problem

When a positive-pressure load due to a snow load or the like is applied to a solar cell module that is structured as described above, strong bending stress and shearing stress are applied to the solar cell module at an angular portion of the reinforcing member in a rectangular columnar shape. These stresses are repeatedly applied to the solar cell module over the design life (for example, 20 years) of the solar cell module. If stresses are repeatedly applied to a solar cell module for a long period of time, cracks may occur in a plurality of solar cell elements included in the solar cell module and in glass that covers the solar cell elements and delamination may occur between the plurality of solar cell elements and inner leads that electrically connect the solar cell elements.

To enable the use of photovoltaic power generating systems in windy areas, heavy snow areas, and the like as well in response to users' requests, there is another need to increase the load bearing performance of the solar cell module.

Accordingly, an object of the present invention is to provide a solar cell module that comprises a simple structure but is superior in load bearing performance.

### Solution to Problem

The invention consists on a solar cell module according to claim 1.

### Advantageous Effects of Invention

When the solar cell module described above receives a positive-pressure load, the horizontal part of the reinforcing member can support the solar cell module by distributing stress in a compressed direction and the inclined part disposed at an end of the horizontal part can reduce shearing stress. Accordingly, it is possible to provide a solar cell module that comprises a simple structure but is superior in load bearing performance.

### Brief Description of Drawings

Fig. 1 illustrates a solar cell module according to a first embodiment of the present invention; Fig. 1(a) is a perspective view of the solar cell module as viewed from a non-light-receiving surface side, Fig. 1(b) is a cross-sectional view as taken along line A-A' in Fig. 1(a), Fig. 1(c) is a cross-sectional view as taken along line B-B' in Fig. 1(a), and Fig. 1(d) is a perspective view of a reinforcing member included in the solar cell module.
Fig. 2 is a perspective view of the laminated structure of a solar cell panel, in a disassembled state, which is part of the solar cell module illustrated in Fig. 1.
Fig. 3 is a cross-sectional view, as taken along line C-C' in Fig. 1(a), illustrating a state in which a load has been applied to the solar cell panel and the solar cell panel has been thereby curved.

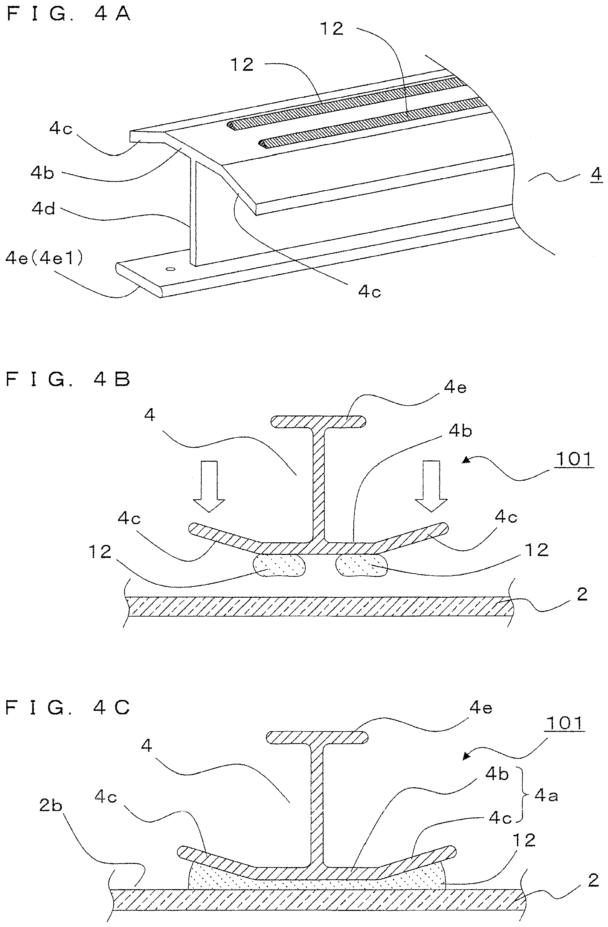

Fig. 4 illustrates a method of bonding the reinforcing member, which is part of the solar cell module according to the first embodiment of the present invention; Fig. 4(a) is a perspective view illustrating a state in which an adhesive has been applied to the reinforcing member; Fig. 4(b) is a cross-sectional view illustrating a state immediately before the reinforcing member is bonded to the non-light-receiving surface of the solar cell panel; Fig. 4(c) is a cross-sectional view illustrating a state in which the reinforcing member has been bonded to the non-light-receiving surface of the solar cell panel by using the adhesive.
Fig. 5 illustrates part of a solar cell module according to a second embodiment of the present invention; the drawing is a cross-sectional view at a position equivalent to Fig. 1(b) in the first embodiment.
Fig. 6 illustrates part of a solar cell module according to a third embodiment of the present invention; the drawing is a cross-sectional view at a position equivalent to Fig. 1(b) in the first embodiment.
Fig. 7 illustrates a solar cell module according to a fourth embodiment of the present invention; Fig. 7(a) is a perspective view of the reinforcing member, which is included in the solar cell module; Fig. 7(b) is a cross-sectional view at a position equivalent to Fig. 1(c).
Fig. 8 illustrates part of a solar cell module according to a fifth embodiment of the present invention; the drawing is a perspective view illustrating a state in which the solar cell panel, the reinforcing member, and a first retaining member are combined.
Fig. 9 illustrates part of a solar cell module according to a sixth embodiment of the present invention; the drawing is a cross-sectional view at a position equivalent to Fig. 1(b) in the first embodiment.
Fig. 10 illustrates a solar cell module according to a seventh embodiment of the present invention; the drawing is a perspective view illustrating a state in which the solar cell panel, the reinforcing member, and the first retaining member are combined.
Fig. 11 illustrates part of a solar cell module according to an eighth embodiment of the present invention; the drawing is a perspective view illustrating a state in which the solar cell panel, the reinforcing member, and the first retaining member are combined.
Fig. 12 illustrates part of a solar cell module according to a ninth embodiment of the present invention; the drawing is a cross-sectional view at a position equivalent to Fig. 1(b) in the first embodiment.
Figs. 13(a), 13(b), and 13(c) each illustrate part of a solar cell module according to other embodiments of the present invention; these drawings are cross-sectional views at a position equivalent to Fig. 1(b) in the first embodiment respectively.

### Description of Embodiments

Solar cell modules according to embodiments of the present invention will be described with reference to the drawings. Members with the same name included in the solar cell modules are assigned same reference characters. The drawings are schematic drawings; the sizes, the positional relationship, and the like of constituent elements in each drawing are not necessarily accurate.

### <First embodiment>

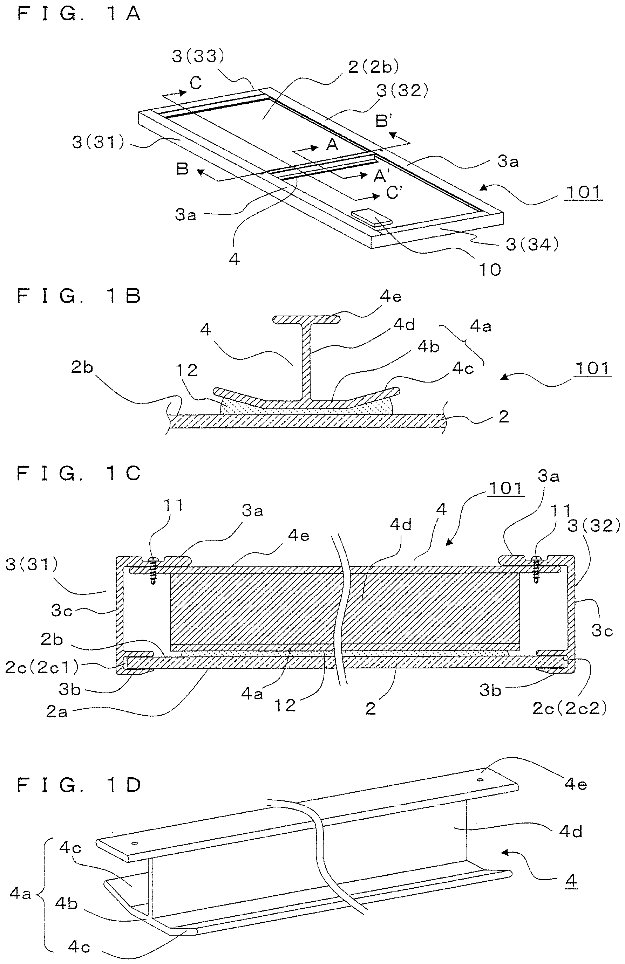

A solar cell module 101 according to a first embodiment will be described with reference to Figs. 1 to 3.

Basically, as illustrated in Figs. 1(a) and 1(c), the solar cell module 101 includes, for example, a solar cell panel 2, which is rectangular in a plan view, a retaining member 3 that retains the outer edges of the solar cell panel 2, and a reinforcing member 4. The retaining member 3 includes, for example, a first retaining part 31 and a second retaining part 32 that retain a pair of side parts 2c (first side part 2c1 and second side part 2c2), which are mutually substantially parallel, of the solar cell panel 2, a third retaining part 33 and a fourth retaining member 34 that retain another pair of side parts, which are mutually substantially parallel, of the solar cell panel 2. The solar cell module 101 may further includes a terminal box 10, which is used to supply an output from the solar cell panel 2, on a non-light-receiving surface 2b equivalent to the rear surface of the light-receiving surface 2a of the solar cell panel 2.

As described above, the solar cell module 101 includes: the solar cell panel 2 that has the light-receiving surface 2a and non-light-receiving surface 2b and also includes the first side part 2c1 and second side part 2c2, which are disposed between the light-receiving surface 2a and the non-light-receiving surface 2b and are not on the same surface; the first retaining part 31 that retains the first side part 2c1 of the solar cell panel 2; the second retaining part 32 that retains the second side part 2c2 of the solar cell panel 2; and the reinforcing member 4, which is disposed between the first retaining part 31 and the second retaining part 32 on the same side as the non-light-receiving surface 2b, in an elongated shape.

As illustrated in Figs. 1(b) and 1(d), the reinforcing member 4 comprises a support part 4a that supports the non-light-receiving surface 2b of the solar cell panel 2. The support part 4a includes a horizontal part 4b parallel to the non-light-receiving surface 2b and also includes inclined parts 4c disposed at both ends of the horizontal part 4b, the inclined part 4c being inclined so as to be apart from the non-light-receiving surface 2b as the inclined part 4c is apart from the horizontal part 4b. One end of the reinforcing member 4 in its longitudinal direction is linked to an attaching part 3a of the first retaining part 31, and another end is linked to the attaching part 3a of the second retaining part 32.

Next, members constituting the solar cell module 101 will be described in detail.

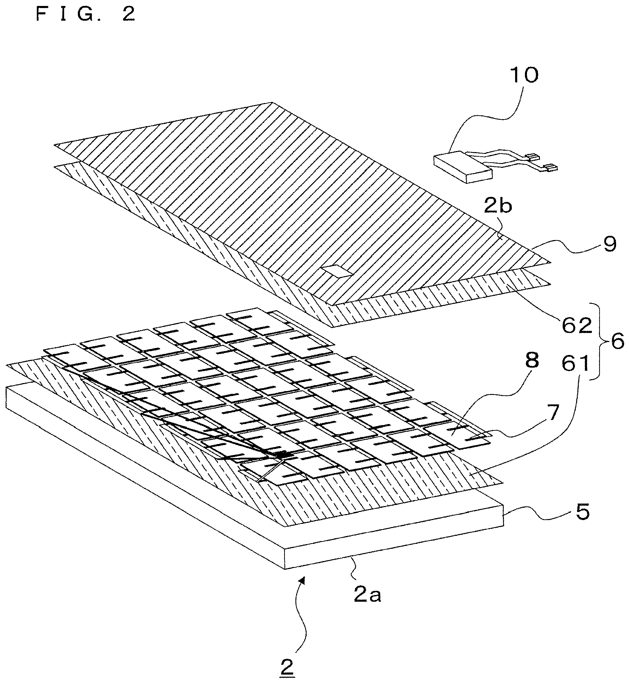

The solar cell panel 2 includes a translucent substrate 5, a first filler 61 on the same side as the light-receiving surface 2a, a plurality of solar cell elements 8, a second filler 62 on the same side as the non-light-receiving surface 2b, a rear surface protecting film 9, and the terminal box 10 in that order, starting from the same side as the light-receiving surface 2a, as illustrated in, for example, Fig. 2. The first filler 61 and second filler 62 constitute a filler 6 that seals the solar cell elements 8 and the like.

The translucent substrate 5, which functions as a substrate of the solar cell module 101, is made of, for example, a material having a high optical transmittance such as glass or a polycarbonate resin. The filler 6, which has a function to seal the solar cell elements 8, is made of, for example, a thermosetting resin. The plurality of solar cell elements 8, the periphery of which is protected by the filler 6, are electrically connected by inner leads 7. The rear surface protecting film 9, which has a function to protect the same side as the non-light-receiving surface 2b of the solar cell panel 2, is made of, for example, polyvinyl fluoride (PVF), polyethylene terephthalate (PET), polyethylene naphthalate (PEN), or a resin formed by laminating at least two of these components. The terminal box 10 is bonded to the rear surface protecting film 9; the terminal box 10 has a function to supply an output from the solar cell panel 2 to the outside.

The light-receiving surface 2a (one main surface of the translucent substrate 5) of the solar cell panel 2 mainly receives light. It is not true that the non-light-receiving surface 2b (one main surface of the rear surface protecting film 9), which is equivalent to the rear surface of the light-receiving surface 2a, receives no light. When, for example, the rear surface protecting film 9 and the filler 6 interposed between the solar cell elements 8 and the rear surface protecting film 9 are made of a translucent material, the non-light-receiving surface 2b may receive part of light directed from the non-light-receiving surface 2b side.

To form the solar cell element 8, a flat plate-like member made of, for example, monocrystal silicon, polycrystal silicon, or the like is used. When this type of silicon substrate is used, adjacent silicon substrates are electrically connected by the inner leads 7.

A thin-film solar cell, for example, may be used as the solar cell element 8. Alternatively, a solar cell in which a thin amorphous film is formed on a crystalline silicon substrate or the like may be used. A non-silicon solar cell may also be used as the solar cell element 8; for example, chalcopyrite-based (including CIGS (Cu (In, Ga)Se₂), CISS (Cu (In, Ga)(Se, S)₂, CIS (CuInS₂) and the like) solar cells, CdTe solar cells, and solar cells made of other various materials may be used. In this embodiment and other embodiments described below, embodiments in which a polycrystal silicon substrate is used as the solar cell element 8 will be described.

As illustrated in Fig. 1(c), the first retaining part 31 and second retaining part 32 are disposed at sides of the solar cell panel 2; they each have a function to retain a side of the solar cell panel 2. Specifically, the first retaining part 31 retains the first side part 2c1 of the solar cell panel 2 and the second retaining part 32 retains the second part 2c2 of the solar cell panel 2.

This pair of retaining members 3 each include a fitting part 3b to which the solar cell panel 2 is fitted, a wall part 3c, which is substantially perpendicular to the main surface of the solar cell panel 2, and the attaching part 3a in a plate shape, which extends from the wall part 3c toward a space enclosed by the retaining member 3 so as to partially cover the non-light-receiving surface 2b of the solar cell panel 2 and both ends of the reinforcing member 4. Although Fig. 1(c) illustrates a state in which the first retaining part 31 and the first side part 2c1 of the solar cell panel 2 are linked, the second retaining part 32 and the second side part 2c2 of the solar cell panel 2 are similarly linked.

The retaining member 3 can be manufactured by, for example, extruding aluminum, roll forming a steel sheet, or performing another method.

Although, in this embodiment, the retaining member 3 is a frame-like body that retains the sides of the entire circumference of the solar cell panel 2, this is not a limitation; if the retaining member 3 can retain the solar cell panel 2, it may be a pair of rod-like bodies that retain at least a pair of sides, which are not on the same surface, of the solar cell panel 2.

An adhesive 12 interposed between the support part 4b of the reinforcing member 4 and the non-light-receiving surface 2b of the solar cell panel 2 may be, for example, a silicon-based adhesive, a polyurethane resin-based adhesive, an epoxy resin-based adhesive, or the like can be used.

The reinforcing member 4 has a function to enhance the load bearing performance of the solar cell panel 2. The reinforcing member 4 is in an elongated shape as illustrated in Figs. 1(a), 1(c), and 1(d); it is disposed between the first retaining part 31 and the second retaining part 32 on the same side as the non-light-receiving surface 2b of the solar cell panel 2.

The reinforcing member 4 comprises the support part 4a in a flat plate shape, a perpendicular part 4d, and a flange part 4e as illustrated in Fig. 1(b); the reinforcing member 4 has a cross sectional shape in which these parts are linked in, for example, a substantially H-shaped form. The support part 4a is a part that retains the non-light-receiving surface 2b of the solar cell panel 2, the flange part 4e is a part that is linked to the retaining member 3, and the perpendicular part 4d is a part that links the support part 4a and flange part 4e together.

The support part 4a includes the horizontal part 4b parallel to the non-light-receiving surface 2b and also includes the inclined parts 4c disposed at both ends of the horizontal part 4b, the inclined part 4c being inclined so as to be apart from the non-light-receiving surface 2b as the inclined part 4c is apart from the horizontal part 4b. Specifically, the horizontal part 4b is plate-like and flat and the inclined parts 4c are disposed gently at both ends of the horizontal part 4b so as to be continuous from the horizontal part 4b, as illustrated in Figs. 1(b) and 1(d). To further reduce the shearing force applied to the solar cell panel 2, the main surface on a side that abuts the solar cell panel 2, the main surface being at a portion at which these horizontal part 4b and inclined parts 4c are linked, can be made to be a gentle curved surface.

This reinforcing member 4 can be manufactured by, for example, extruding aluminum, roll forming a steel sheet, or performing another method. As long as the shape of the support part 4a is as described above, the cross-sectional shape of the reinforcing member 4 can be appropriately selected according to the usage; for example, an I-shaped cross section, an H-shaped cross section, a T-shaped cross section, an L-shaped cross section, or the like can be selected.

The reinforcing member 4 is secured to the attaching part 3a of the retaining member 3 at both ends in the longitudinal direction of the reinforcing member 4 with, for example, screws 11, as illustrated in Fig. 1(c). In this case, in this embodiment, the reinforcing member 4 is secured to the non-light-receiving surface 2b of the solar cell panel 2 by being bonded with the adhesive 12. In more details, the reinforcing member 4 is secured to the solar cell panel 2 by filling with the adhesive 12 between the non-light-receiving surface 2b and the horizontal part 4b of the reinforcing member 4 and between each inclined part 4c and the non-light-receiving surface 2b.

Thus, in a case as well in which a positive load is applied to the solar cell module 101 (particularly, the solar cell panel 2), the horizontal part 4b of the reinforcing member 4 can distribute compressed stress in the positive pressure direction and the solar cell panel 2 can be preferably supported by the reinforcing member 4. Furthermore, as illustrated in Fig. 1(b), the thickness of the adhesive 12 is increased toward an end of the inclined part 4c (end in the short direction of the reinforcing member 4). Therefore, the adhesive 12 is likely to be deformed in the compressed direction with a less force toward the outer edge of the reinforcing member 4, and the shearing stress applied to the solar cell panel 2 by the outer edge of the reinforcing member 4 can be reduced.

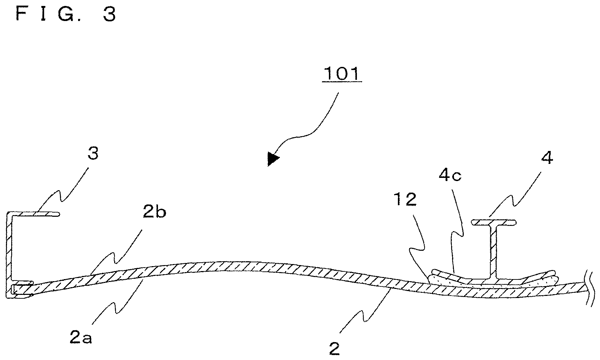

In addition, when a large positive-pressure load is applied to the solar cell panel 2, the solar cell panel 2 is convexly warped toward the non-light-receiving surface 2b between the retaining member 3 and the reinforcing member 4, as illustrated in Fig. 3. In this case, since the reinforcing member 4 comprises the structure described above, the inclined part 4c can support the solar cell panel 2, which has been curved by the positive-pressure load, along the solar cell panel 2, so the shearing stress can be preferably alleviated.

The reinforcing member 4 is shaped so that the inclined part 4c is gradually apart from the rear surface of the solar cell panel 2 toward its end (end in the short direction of the reinforcing member 4). Thus, as illustrated in Fig. 4, a large space is formed between the inclined part 4c and the non-light-receiving surface 2b; when the reinforcing member 4 is bonded by applying the adhesive 12 to it, the space functions as a space that prevents the adhesive 12 from extending beyond the reinforcing member 4. This prevents the adhesive 12 from extending beyond the outer edge of the reinforcing member 4, enabling the solar cell module 101 to have a superior external appearance.

The short direction of the reinforcing member 4 described above refers to, for example, a direction perpendicular to the longitudinal direction of the reinforcing member 4.

As in this embodiment, the inclined part 4c is not perpendicular to the horizontal part 4b but is inclined as described above. Since, in this form, the support part 4a has a shape in which there is no angular portion in the short direction, it is possible to reduce strong bending stress and shearing stress caused by the angular portion and applied to the solar cell module.

Furthermore, in this embodiment, as illustrated in Fig. 4(c), the end of the adhesive 12 is positioned outside the end of the horizontal part 4b and inside the end of the inclined part 4c, in the short direction of the reinforcing member 4. This structure makes the end of the adhesive 12 hard to deteriorate due to ultraviolet rays and increases the bonding strength between the adhesive 12 and a rear reinforcing member 15. As a result, detachment between the adhesive 12 and the rear reinforcing member 15 can be reduced, making the solar cell panel superior in load bearing performance.

The reinforcing member 4 may be bonded to the non-light-receiving surface 2b of the solar cell panel 2 with a member other than the adhesive 12. In this structure as well, the horizontal part 4b can distribute compressed stress in the positive pressure direction and the inclined part 4c can reduce the shearing stress, as described above. As a member, other than the adhesive 12, that is disposed between the reinforcing member 4 and the non-light-receiving surface 2b, urethane foam with a seal, ethylene propylene diene monomer (EPDM), or another foaming agent, for example, can be used.

Although, in this embodiment, the adhesive 12 is filled between the non-light-receiving surface 2b and the horizontal part 4b of the reinforcing member 4 and between the inclined part 4c and the non-light-receiving surface 2b, this is not a limitation. For example, the adhesive 12 may be disposed only between the horizontal part 4b and the non-light-receiving surface 2b. In this structure, since the inclined part 4c is positioned outside the horizontal part 4b bonded with the adhesive 12, the section modulus of the reinforcing member 4 is increased and load bearing performance can be thereby improved.

Although, in this embodiment, the inclined part 4c has a flat plate shape as an example, this is not a limitation. For example, the inclined part 4c may have a plate-like shape with a curved surface. In this structure, if an extremely large positive pressure load is applied to the solar cell panel 2 and the solar cell panel 2 is greatly curved when, for example, the solar cell module 101 is placed in a very severe environment, local load applications can be reduced.

Although, in this embodiment, the inclined part 4c is disposed at the end, which is part of the support part 4a, in the short direction of the reinforcing member 4, the support part 4a may include another plate-like part outside the inclined part 4c. This improves the section modulus.

### <Second embodiment>

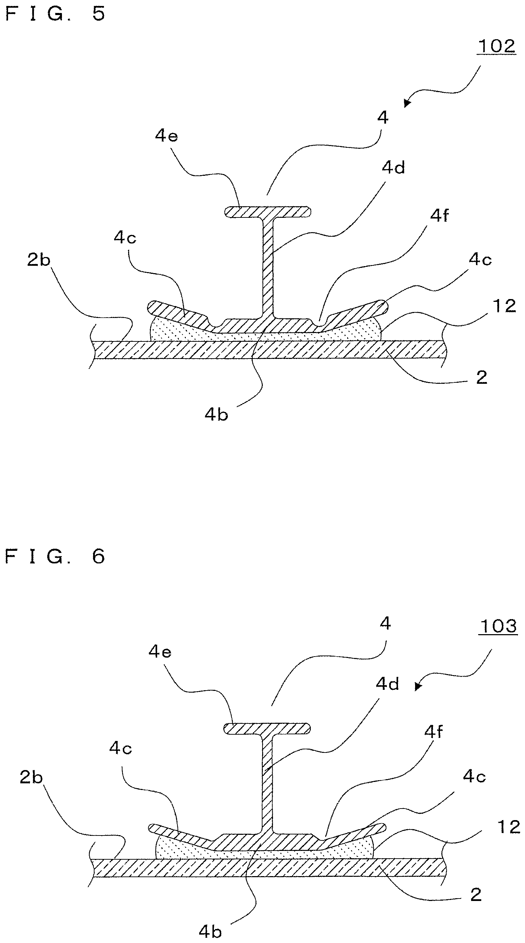

Next, a solar cell module 102 according to a second embodiment of the present invention will be described with reference to Fig. 5.

In the solar cell module 102 according to this embodiment, the reinforcing member 4 has a different shape than in the solar cell module 101 according to the first embodiment. Specifically, as illustrated in Fig. 5, the reinforcing member 4 further includes a linking part 4f that links the horizontal part 4b and inclined part 4c together. The thickness of the linking part 4f is smaller than the thickness of the horizontal part 4b and is also smaller than the thickness of the inclined part 4c. That is, the solar cell module 102 differs from the first embodiment in that the reinforcing member 4 is likely to be warped by being thinned at a linking part between the horizontal part 4b and the inclined part 4c.

In this structure, for example, the linking part between the horizontal part 4b and the inclined part 4c may be cut on the same side as the non-light-receiving surface 2 so that the reinforcing member 4 comprises a thin part (linking part 4f), as illustrated in Fig. 5. This makes a warp to be likely to occur at the linking part between the horizontal part 4b and inclined part 4c of the reinforcing member 4. Thus, when a high positive pressure load is applied to the solar cell module 102, the support part 4a is warped at a portion ahead of the inclined part 4c, so the shearing stress can be alleviated and generation of cracks in the translucent substrate 5 and solar cell elements 8 can be suppressed, enabling delamination between the solar cell elements 8 and the inner leads 7 to be reduced.

The structure of the reinforcing member 4 comprising the linking part 4f, which is thinned as described above, is not limited to a structure formed by making a cutout. This linking part 4f can be manufactured by, for example, applying aluminum extrusion to the reinforcing member 4 or by processing the reinforcing member 4 that has been aluminum extruded.

In this embodiment in which the linking part 4f is provided, the adhesive 12 may also be displaced between the linking part 4f and the non-light-receiving surface 2b as illustrated in Fig. 5. This makes the support part 4a to be likely to be warped and reduces the shearing stress caused by the adhesive 12.

As in this embodiment, the linking part 4f is curved in a vertex form toward the non-light-receiving surface 2b and continuously links the horizontal part 4b and the inclined part 4c together. That is, as illustrated in Fig. 4, the main surface, facing the non-light-receiving surface 2b, of the linking part 4f is curved. The main surface continuously links the main surface, facing the non-light-receiving surface 2b, of the horizontal part 4b and the main surface, facing the non-light-receiving surface 2b, of the inclined part 4c together. This structure further enhances the effect of reducing the shearing force applied to the solar cell panel 2.

### <Third embodiment>

Next, a solar cell module 103 according to a third embodiment of the present invention will be described with reference to Fig. 6. The solar cell module 103 according to this embodiment differs from the first embodiment in the shape of the reinforcing member 4.

Specifically, as illustrated in Fig. 6, a thickness of the inclined part 4c is smaller than a thickness of the horizontal part 4b in the solar cell module 103 according to this embodiment. In this structure as well, it can be said that, as in the second embodiment, the linking portion between the horizontal part 4b and the inclined part 4c is thinned. That is, this embodiment has a shape in which the thickness of the support part 4a is reduced ahead of the linking part between the horizontal part 4b and the inclined part 4c.

In this structure as well, a warp is likely to occur at the linking part between the horizontal part 4b and inclined part 4c of the reinforcing member 4 as in the second embodiment. Thus, since the support part 4a is warped at a portion ahead of the inclined part 4c, the shearing stress can be alleviated and generation of cracks in the translucent substrate 5 and solar cell elements 8 can be suppressed, so the effect of reducing delamination between the solar cell elements 8 and the inner leads 7 can be obtained.

Furthermore, in this embodiment, in addition to the above effect, the reinforcing member 4 includes no locally thick portion in the cross sectional shape in its longitudinal direction, so it is possible to reduce reduction in strength due to stress concentrated on the reinforcing member 4 itself.

### <Fourth embodiment>

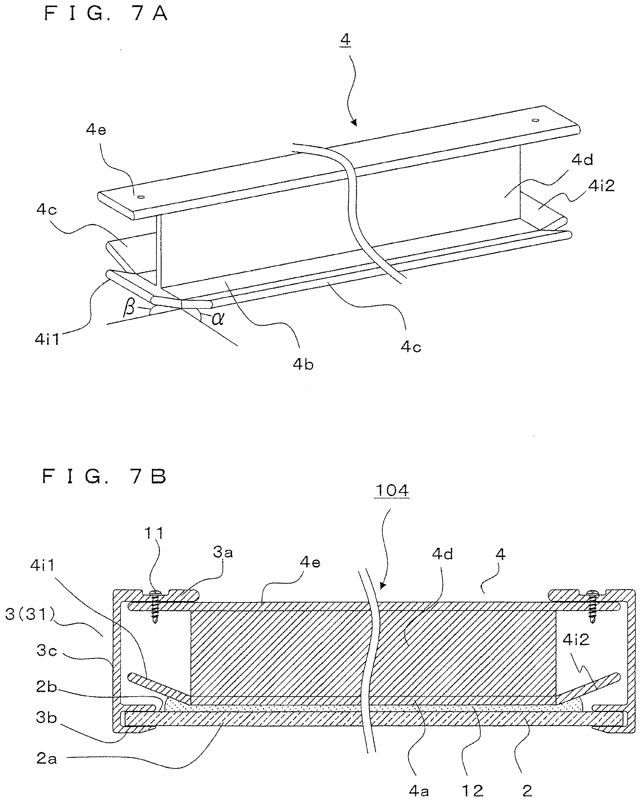

Next, a solar cell module 104 according to a fourth embodiment of the present invention will be described with reference to Fig. 7. As illustrated in Figs. 7(a) and 7(b), the solar cell module 104 according to this embodiment differs from the first embodiment in that a first end part 4i1 and a second end part 4i2 are provided at both ends (one end part at each end) in the longitudinal direction of the reinforcing member 4.

Specifically, the support part 4a includes the first end part 4i1 and second end part 4i2 at both ends in the longitudinal direction of the reinforcing member 4. The first end part 4i1 and second end part 4i2 are inclined so as to be apart from the non-light-receiving surface 2b as they come close to both ends. That is, when the first end part 4i1 is taken as an example, the first end part 4i1 is inclined so as to be apart from the non-light-receiving surface 2b as the first end part 4i1 comes close to the first retaining part 31, as illustrated in Fig. 7(b).

These first end part 4i1 and second end part 4i2 can be formed by elongating the horizontal part 4b in the longitudinal direction and bending the horizontal part 4b toward the non-light-receiving surface 2b.

This structure can reduce the shearing stress at both ends in the longitudinal direction of the reinforcing member 4 as well and can enhance the load bearing performance of the solar cell module 104.

In this structure, as the state in which the reinforcing member 4 and the retaining member 3 are linked, the end of the first end part 4i1 in the longitudinal direction may be disposed so as to cover part of the fitting part 3b, as illustrated in Fig. 7(b). Then, the adhesive 12 is also filled between the first end part 4i1 and the non-light-receiving surface 2b, linking the reinforcing member 4 and retaining member 3 together.

In this embodiment, an inclination angle α of the inclined part 4c with respect to the non-light-receiving surface 2b of the solar cell panel 2 (or the horizontal surface of the horizontal part 4b) may be larger than an inclination angle β of the first end part 4i1 and second end part 4i2 with respect to the non-light-receiving surface 2b of the solar cell panel 2 (or the horizontal surface of the horizontal part 4b), as illustrated in Fig. 7(a). The solar cell panel 2 and the end of the reinforcing member 4 in its short direction are close to the retaining member 3, as illustrated in Fig. 7(b). That is, since the end of the reinforcing member 4 in the short direction is in the vicinity of a portion at which the solar cell panel 2 and retaining member 3 are fitted, the inclination angle β of the first end part 4i1 can be made small. If the inclination angle α and inclination angle β have the above relationship, therefore, extrusion of the adhesive 12 on the same side as the first end part 4i1 can be suppressed and a support can be obtained along the warp in the longitudinal direction of the reinforcing member 4.

The inclination angle α and inclination angle β can be each an inclination angle of the various parts with respect to the horizontal surface of the horizontal part 4b, as described above. Although the inclination angle β1 of the first end part 4i1 and the inclination angle β2 of the second end part 4i2 may be the same or different, the inclination angle β1 and inclination angle β2 can be made the same from the viewpoint of the ease of manufacturing and the stiffness of the reinforcing member 4.

### <Fifth embodiment>

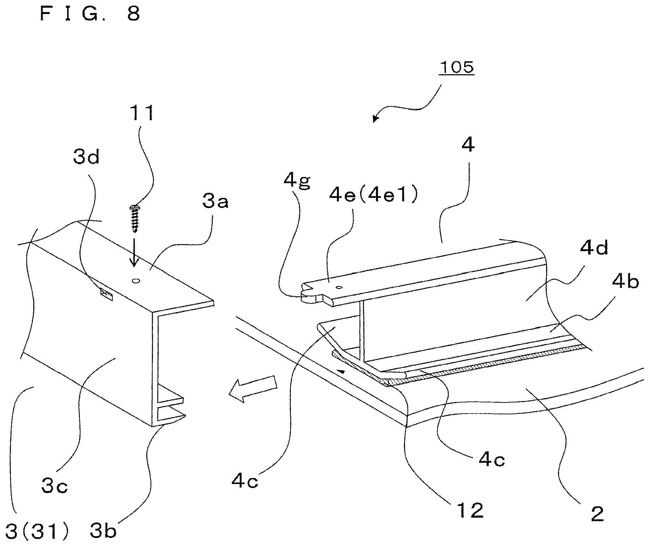

Next, a solar cell module 105 according to a fifth embodiment of the present invention will be described with reference to Fig. 8. The solar cell module 105 according to this embodiment differs from the first embodiment in the structure in which the retaining member 3 and reinforcing member 4 are fitted.

Specifically, a fitting hole 3d is formed in the retaining member 3, as illustrated in Fig. 8. When a fitting protrusion 4g formed on the flange part 4e of the reinforcing member 4 is inserted into the fitting hole 3d, the retaining member 3 and reinforcing member 4 are fitted. That is, the reinforcing member 4 comprises the flange part 4e. The flange part 4e includes a first flange part 4e1 that links to the first retaining part 31 and a second flange part 4e2 that links to the second retaining part 32. The first flange part 4e1 and second flange part 4e2 each include a fitting protrusion 4g. The fitting protrusion 4g of the first flange part 4e1 is fitted to the fitting hole 3d formed in the first retaining part 31, and the fitting protrusion 4g of the second flange part 4e2 is fitted to the fitting hole 3d formed in the second retaining part 32. Although Fig. 8 illustrates a state in which the first retaining part 31 and first flange part 4e1 are linked together, a state in which the second retaining part 32 (not illustrated) and the second flange part 4e2 (not illustrated) are linked together is also the same.

When the fitting protrusion 4g is fitted to the fitting hole 3d in this way, strength with which the reinforcing member 4 is attached can be increased. The distance between the support part 4a and the non-light-receiving surface 2b of the solar cell panel 2 can be restricted according to a positional relationship between the fitting protrusion 4g and the fitting hole 3d. Thus, the adhesive 12 can be managed to a desired thickness. When this type of solar cell module is assembled, the reinforcing member 4 is preferably bonded to the solar cell panel 2 before the retaining member 3 is attached to the solar cell panel 2. This can increase the load bearing performance of the solar cell module.

### <Sixth embodiment>

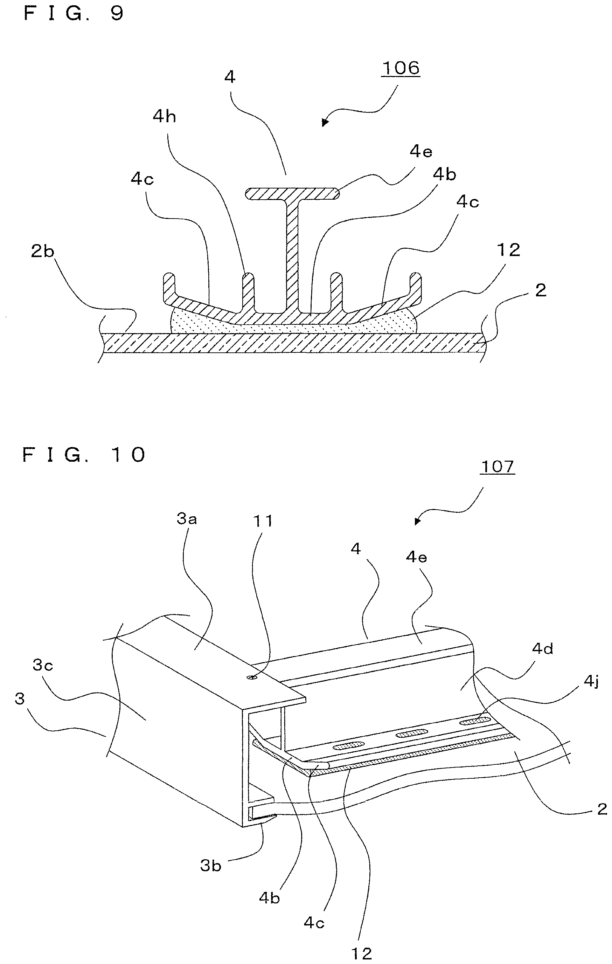

Next, a solar cell module 106 according to a sixth embodiment of the present invention will be described with reference to Fig. 9. As illustrated in Fig. 8, the solar cell module 106 according to this embodiment differs from the first embodiment in that reinforcing protrusions 4h are formed on the support part 4a of the reinforcing member 4 on the same side as the non-light-receiving surface 2b.

That is, in this embodiment, the support part 4a includes the reinforcing protrusions 4h, which extend from the horizontal part 4b or inclined part 4c in a direction away from the non-light-receiving surface 2b. Since these reinforcing protrusions 4h are formed, warp of the reinforcing member 4 in its longitudinal direction can be reduced. This can further increase the load bearing performance of the solar cell module 106.

In this embodiment, the reinforcing protrusion 4h is formed in a direction perpendicular to the non-light-receiving surface 2b. The support part 4a includes four reinforcing protrusions 4h of this type. Since the reinforcing protrusion 4h extends perpendicularly to the non-light-receiving surface 4b, the effect of reducing warp of the reinforcing member 4 in its longitudinal direction can be increased. The number of reinforcing protrusions 4h may be appropriately selected according to the shape and material of the reinforcing member 4. The reinforcing protrusions 4h may be formed only on the horizontal part 4b. Alternatively, they may be formed on only the inclined part 4c.

### <Seventh embodiment>

Next, a solar cell module 107 according to a seventh embodiment of the present invention will be described with reference to Fig. 10. As illustrated in Fig. 10, the solar cell module 107 in this embodiment differs from the first embodiment in that the solar cell module 107 has through-holes 4j in the horizontal part 4b of the reinforcing member 4.

Specifically, the support part 4a has the through-holes 4j, which extend approximately perpendicular to the non-light-receiving surface 2b, as illustrated in Fig. 10. In this structure, the support part 4a of the reinforcing member 4 having these through-holes 4j and the non-light-receiving surface 2b (rear surface protecting film 9) of the solar cell panel 2 are disposed with a clearance interposed therebetween and the retaining member 3 and reinforcing member 4 are secured together with a screw 11. When the adhesive 12 is then injected from the through-holes 4j of the support part 4a, the support part 4a of the reinforcing member 4 and rear surface protecting film 9 can be bonded together. In this case, the clearance between the support part 4a and the rear surface protecting film 9 is preferably a clearance in which an adhesive layer with an optimum thickness can be formed. When the adhesive 12 is injected through the through-holes 4j in this way, at least part of the adhesive 12 is placed in the through-holes 4j.

Since, in this embodiment, the through-holes 4j described above are formed, the adhesive 12 can be easily placed in the clearance between the reinforcing member 4 and the rear surface protecting film 9, which is equivalent to the non-light-receiving surface 2b of the solar cell panel 2. This improves working efficiency in solar cell module assembling.

This embodiment is structured so that when the adhesive 12 spreads toward the inclined part 4c as the adhesive 12 is injected from the through-holes 4j, the clearance between the inclined part 4c and the non-light-receiving surface 2b gradually expands toward the outside. Thus, the adhesive 12 is likely to stay in the clearance, reducing extrusion of the adhesive 12 from the reinforcing member 4.

Although, in this embodiment, the through-holes 4j are formed in the horizontal part 4b of the support part 4a, this is not a limitation. It suffices that the through-holes 4j are only formed so as to enable the adhesive 12 to be injected; for example, the through-holes 4j may be formed in the inclined part 4c.

### <Eighth embodiment>

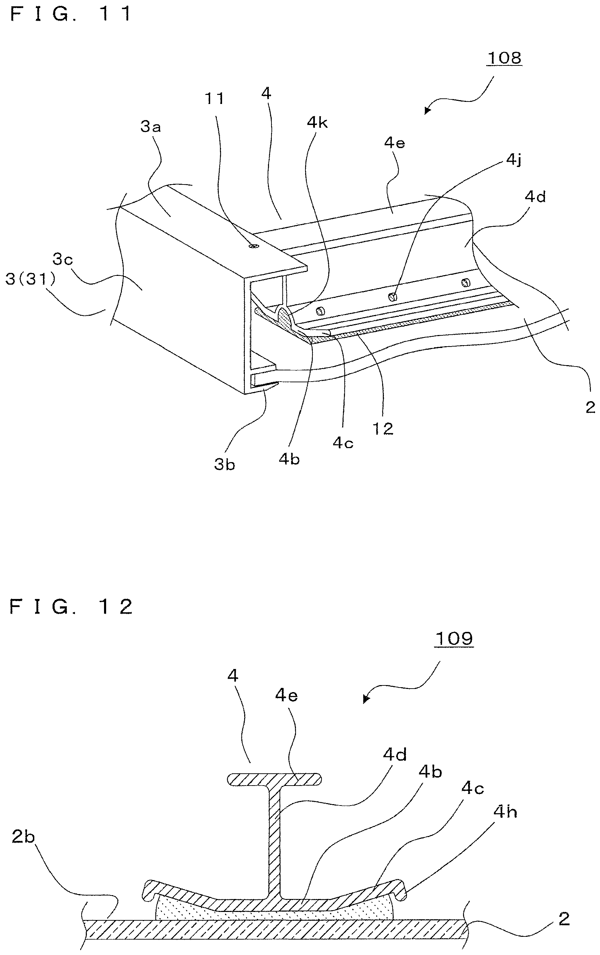

Next, a solar cell module 108 according to an eighth embodiment of the present invention will be described with reference to Fig. 11. As illustrated in Fig. 11, the solar cell module 108 in this embodiment differs from the first embodiment in that an arch part 4k is formed on the support part 4a of the reinforcing member 4 and the through-holes 4j are formed in the arch part 4k.

Specifically, in this embodiment, the support part 4a includes the arch part 4k, horizontal part 4b, and inclined part 4c sequentially in that order in the short direction of the reinforcing member 4, starting from its center, as illustrated in Fig. 11. The arch part 4k has the through-holes 4j. The arch part 4k is shaped so as to be concavely curved against the non-light-receiving surface 2b. The horizontal part 4b is linked to the arch part 4k at an end and is linked to the inclined part 4c at another end.

In this structure, the adhesive 12 is injected from the through-holes 4j as described in the seventh embodiment. The adhesive 12 that has been injected from the through-holes 4j are viscous before curing, so the adhesive 12 is likely to flow from a narrow clearance to a wide clearance. Since, in this embodiment, the support part 4a includes the arch part 4k as described above, a wide path through which the adhesive 12 flows is formed inside the arch part 4k, that is, between the arch part 4k and the non-light-receiving surface 2b. Accordingly, the adhesive 12 that has injected from the through-holes 4j preferentially spreads first in the longitudinal direction of the reinforcing member 4. The adhesive 12 then spreads in the short direction of the reinforcing member 4. The clearance between the support part 4a and the non-light-receiving surface 2b is filled with the adhesive 12, which has spread in this way, bonding the support part 4a and the non-light-receiving surface 2b together. Thus, the adhesive 12 can be smoothly injected to places distant from the through-holes 4j. As a result, in this embodiment, the number of through-holes 4j can be reduced, so working efficiency in the injection of the adhesive 12 can be improved.

Although the adhesive 12 also spreads toward the inclined part 4c, that is, in the short direction of the reinforcing member 4 as the adhesive 12 is injected from the through-holes 4j, this embodiment is structured so that the clearance between the inclined part 4c and the non-light-receiving surface 2b gradually expands in the short direction of the reinforcing member 4 toward the outside, as in the embodiment described above. Accordingly, the adhesive 12 is likely to stay in the clearance and the effect of reducing extrusion of the adhesive 12 from the reinforcing member 4 can be obtained.

Furthermore, in this embodiment, the arch part 4k is positioned at a central portion of the support part 4a in the short direction of the reinforcing member 4, as illustrated in Fig. 11. In this structure, the adhesive 12 can be more smoothly injected, so working efficiency in injection can be further improved.

The central portion, described here, of the support part 4a in the short direction may be defined as follows: if the dimension of the support part 4a in the short direction is assumed to be L4a, then the central portion may be an area with a dimension of L4a/2 centered around the midpoint of the support part 4a in the short direction.

### <Ninth embodiment>

Next, a solar cell module 109 according to a ninth embodiment of the present invention will be described with reference to Fig. 12. As illustrated in Fig. 12, the solar cell module 109 differs from the sixth embodiment in that the reinforcing protrusions 4h are disposed on the outer edge of the inclined part 4c of the reinforcing member 4 so as to extend toward the non-light-receiving surface 2b.

Specifically, the support part 4a includes the reinforcing protrusions 4h that extend from the inclined part 4c toward the non-light-receiving surface 2b. The reinforcing protrusion 4h in this embodiment extends in a direction substantially perpendicular to the inclined part 4c.

Since, in this embodiment, the reinforcing protrusions 4h as described above are provided, the adhesive 12 can be protected against ultraviolet rays incident on the adhesive 12 and deterioration of the adhesive 12 due to the ultraviolet rays can be thereby reduced. Accordingly, detachment of the adhesive 12 from ends can be reduced. Furthermore, in this structure, the section modulus of the reinforcing member 4 is also increased, so the reinforcing member 4 is less likely to be warped and the strength of the solar cell module 109 can also be increased.

In this structure as well, since the support part 4a includes the reinforcing protrusions 4h, the effect of reducing the warp of the reinforcing member 4 in its longitudinal direction can also be obtained as in the sixth embodiment.

### <Other embodiments>

So far, embodiments of the present invention have been exemplified, but the present invention is not limited to the embodiments described above. It is needless to say that the present invention can take any embodiment without departing from the object of the present invention. For example, another embodiment of the present invention may be any combination of the embodiments described above.

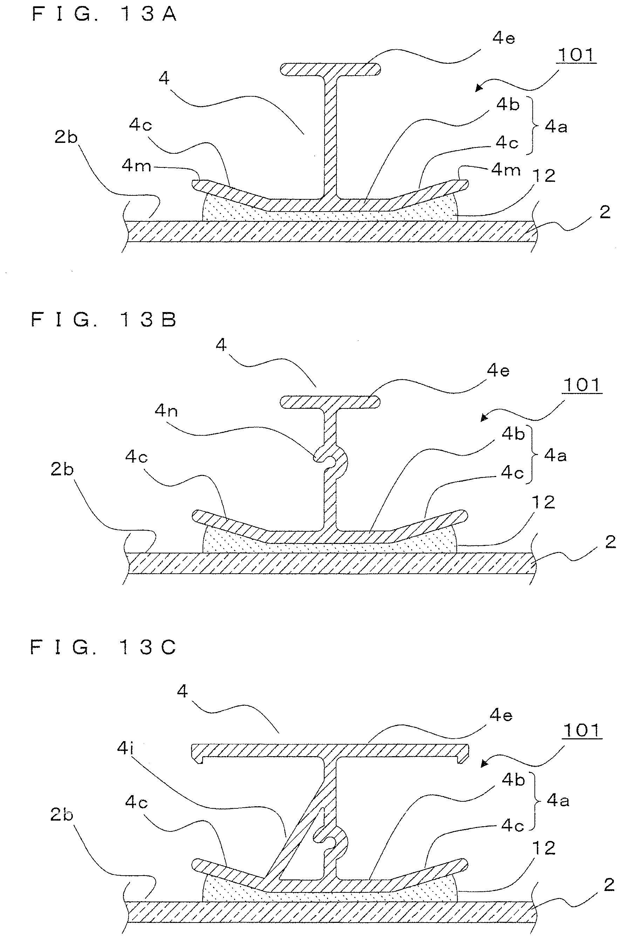

In the case of the reinforcing member 4, for example, horizontal end parts 4g can be formed at both ends of the inclined part 4c along the longitudinal direction of the reinforcing member 4 in the solar cell module 101 of the first embodiment and the like, as illustrated in Fig. 13(a), acute angular portions can be formed at the both ends, and other various changes can be made.

As illustrated in Fig. 13(b), a screw (not illustrated) and a screw hole 4h for securing the screw can also be provided at the central portion in the longitudinal direction of the reinforcing member 4. When a load is applied to the reinforcing member 4, the solar cell panel 2 can be rigidly supported.

As illustrated in Fig. 13(c), a reinforcing rod 4i may be provided among the central portion in the longitudinal direction of the reinforcing member 4, the support part, and the wall part. Thus, a truss structure can be formed, increasing the section modulus of the reinforcing member 4; even when an excessive load is applied to the reinforcing member 4, the solar cell panel 2 can be rigidly supported.

Solar cell modules to which the present invention can be applied are not limited to solar cell modules having the super straight structure described in the above embodiments. The present invention can also be applied to solar cell modules having glass package structures, substrate structures, and other various structures.

### Reference Signs List

101, 102, 103, 104, 105, 106, 107, 108, 109 solar cell module
2 solar cell panel
2a light-receiving surface
2b non-light-receiving surface
2c side part
2c1 first side part
2c2 second side part
3 retaining member
31 first retaining part
32 second retaining part
3a attaching part
3b fitting part
3c wall part
3d fitting hole
4 reinforcing member
4a support part
4b horizontal part
4c inclined part
4d perpendicular part
4e flange part
4e1 first flange part
4e2 second flange part
4f linking part
4g fitting protrusion
4h reinforcing protrusion
4i1 first end part
4i2 second end part
4j through-hole
4k arch part
5 translucent substrate
6 filler
61 first filler
62 second filler
7 inner lead
8 solar cell element
9 rear surface protecting film
10 terminal box
11 screw
12 adhesive

## Claims

1. A solar cell module (101, 102, 103, 104, 105, 106, 107, 108, 109) comprising:
a solar cell panel (2) that has a light-receiving surface (2a) and a non-light-receiving surface (2b), which is equivalent to a rear surface of the light-receiving surface (2a), and also includes a first side part (2c1) and a second side part (2c2), which are disposed between the light-receiving surface (2a) and the non-light-receiving surface (2b) and are not on the same surface;
a first retaining member (31) that retains the first side part (2c1) of the solar cell panel (2);
a second retaining member (32) that retains the second side part (2c2) of the solar cell panel (2); and
a reinforcing member (4) disposed between the first retaining member (31) and the second retaining member (32) on the same side as the non-light-receiving surface (2b), the reinforcing member (4) being in an elongated shape; wherein
the reinforcing member (4) comprises a support part (4a) that supports the non-light-receiving surface (2b) of the solar cell panel (2),
**characterized in that**
the support part (4a) includes a horizontal part (4b) parallel to the non-light-receiving surface (2b) and also includes an inclined part (4c) in a flat plate shape disposed at an end of the horizontal part (4b), the inclined part (4c) being inclined so as to be apart from the non-light-receiving surface (2b) as the inclined part (4c) is apart from the horizontal part (4b), and
the solar cell module (101, 102, 103, 104, 105, 106, 107, 108, 109) further comprises an adhesive (12) disposed between the non-light-receiving surface (2b) and the reinforcing member (4), wherein
the support part (4a) supports the non-light-receiving surface (2b) through the adhesive (12), and
the adhesive (12) is filled between the horizontal part (4b) and the non-light-receiving surface (2b),
the support part (4a) further includes a linking part (4f) that links the horizontal part (4b) and the inclined part (4c) together,
the adhesive (12) is also filled between the linking part (4f) and the non-light-receiving surface (2b), and
the adhesive (12) is also filled between the inclined part (4c) and the non-light-receiving surface (2b).

2. The solar cell module (101, 102, 103, 104, 105, 106, 107, 108, 109) according to Claim 1, wherein the linking part (4f) is convexly curved toward the non-light-receiving surface (2b) and continuously links the horizontal part (4b) and the inclined part (4c) together.

3. The solar cell module (101, 102, 103, 104, 105, 106, 107, 108, 109) according to any one of Claim 1 or 2, wherein an end of the inclined part (4c) is positioned outside an end of the adhesive (12), in a direction perpendicular to a longitudinal direction of the reinforcing member (4).

4. The solar cell module (102, 103) according to Claim 1, wherein:
a thickness of the linking part (4f) is smaller than a thickness of the horizontal part (4b).

5. The solar cell module (102) according to Claim 4, wherein the thickness of the linking part (4f) is smaller than a thickness of the inclined part (4c).

6. The solar cell module (103) according to any one of Claims 1 to 5, wherein a thickness of the inclined part (4c) is smaller than a thickness of the horizontal part (4b).

7. The solar cell module (104) according to any one of Claims 1 to 6, wherein:
the support part (4a) further includes a first end part (4i1) located at one end of both ends of the reinforcing member (4) in a longitudinal direction and a second end part (4i2) located at another end of the both ends; and
the first end part (4i1) and the second end part (4i2) are inclined so as to be apart from the non-light-receiving surface (2b) as the first end part (4i1) and the second end part (4i2) come close to the both ends.

8. The solar cell module (104) according to Claim 7, wherein an inclination angle of the inclined part (4c) with respect to the non-light-receiving surface (2b) is larger than an inclination angle of the first end part (4i1) and second end part (4i2) with respect to the non-light-receiving surface (2b) .

9. The solar cell module (105) according to any one of Claims 1 to 8, wherein:
the reinforcing member (4) further includes a first flange part (4e1) that links to the first retaining part and a second flange part that links to the second retaining part; and
the first flange part (4e1) is fitted to a hole formed in the first retaining part, and the second flange part is fitted to a hole formed in the second retaining part.

## Patentansprüche

1. Ein Solarzellenmodul (101, 102, 103, 104, 105, 106, 107, 108, 109), aufweisend:
ein Solarzellenpaneel (2), das eine Lichtaufnahmefläche (2a) und eine Nicht-Lichtaufnahmefläche (2b) aufweist, die einer rückwärtigen Fläche der Lichtaufnahmefläche (2a) entspricht, und auch einen ersten Seitenteil (2c1) und einen zweiten Seitenteil (2c2) aufweist, die zwischen der Lichtaufnahmefläche (2a) und der Nicht-Lichtaufnahmefläche (2b) angeordnet sind und nicht auf der gleichen Fläche liegen,
ein erstes Halteelement (31), das den ersten Seitenteil (2cl) des Solarzellenpaneels (2) hält;
ein zweites Halteelement (32), das den zweiten Seitenteil (2c2) des Solarzellenpaneels (2) hält; und
ein Verstärkungselement (4), das zwischen dem ersten Halteelement (31) und dem zweiten Halteelement (32) auf der gleichen Seite wie die Nicht-Lichtaufnahmefläche (2b) angeordnet ist, wobei das Verstärkungselement (4) in einer langgestreckten Form ist, wobei
das Verstärkungselement (4) einen Stützteil (4a) aufweist, der die Nicht-Lichtaufnahmefläche (2b) des Solarzellenpaneels (2) abstützt,
**dadurch gekennzeichnet, dass**
der Stützteil (4a) einen horizontalen Teil (4b) parallel zu der Nicht-Lichtaufnahmefläche (2b) aufweist und auch einen geneigten Teil (4c) in einer flachen Plattenform aufweist, der an einem Ende des horizontalen Teils (4b) angeordnet ist, wobei der geneigte Teil (4c) derart geneigt ist, dass er von der Nicht-Lichtaufnahmefläche (2b) getrennt ist, während der geneigte Teil (4c) sich von dem horizontalen Teil (4b) entfernt, und
das Solarzellenmodul (101, 102, 103, 104, 105, 106, 107, 108, 109) ferner einen Klebstoff (12) aufweist, der zwischen der Nicht-Lichtaufnahmefläche (2b) und dem Verstärkungselement (4) angeordnet ist, wobei
der Stützteil (4a) die Nicht-Lichtaufnahmefläche (2b) durch den Klebstoff (12) abstützt, und
der Klebstoff (12) zwischen den horizontalen Teil (4b) und die Nicht-Lichtaufnahmefläche (2b) gefüllt ist,
wobei der Stützteil (4a) ferner einen Verbindungsteil (4f) aufweist, der den horizontalen Teil (4b) und den geneigten Teil (4c) miteinander verbindet,
der Klebstoff (12) auch zwischen den Verbindungsteil (4f) und die Nicht-Lichtaufnahmefläche (2b) gefüllt ist, und
der Klebstoff (12) auch zwischen den geneigten Teil (4c) und die Nicht-Lichtaufnahmefläche (2b) gefüllt ist.

2. Das Solarzellenmodul (101, 102, 103, 104, 105, 106, 107, 108, 109) gemäß Anspruch 1, wobei der Verbindungsteil (4f) konvex in Richtung zu der Nicht-Lichtaufnahmefläche (2b) gekrümmt ist und den horizontalen Teil (4b) und den geneigten Teil (4c) kontinuierlich miteinander verbindet.

3. Das Solarzellenmodul (101, 102, 103, 104, 105, 106, 107, 108, 109) gemäß irgendeinem der Ansprüche 1 oder 2, wobei ein Ende des geneigten Teils (4c) außerhalb eines Endes des Klebstoffs (12) in einer Richtung senkrecht zu einer Längsrichtung des Verstärkungselements (4) angeordnet ist.

4. Das Solarzellenmodul (102, 103) gemäß Anspruch 1, wobei:
eine Dicke des Verbindungsteils (4f) kleiner als eine Dicke des horizontalen Teils (4b) ist.

5. Das Solarzellenmodul (102) gemäß Anspruch 4, wobei die Dicke des Verbindungsteils (4f) kleiner als eine Dicke des geneigten Teils (4c) ist.

6. Das Solarzellenmodul (103) gemäß irgendeinem der Ansprüche 1 bis 5, wobei eine Dicke des geneigten Teils (4c) kleiner als eine Dicke des horizontalen Teils (4b) ist.

7. Das Solarzellenmodul (104) gemäß irgendeinem der Ansprüche 1 bis 6, wobei:
der Stützteil (4a) ferner einen ersten Endteil (4i1), der an einem Ende von beiden Enden des Verstärkungselements (4) in einer Längsrichtung angeordnet ist, und einen zweiten Endteil (4i2), der an einem anderen Ende der beiden Enden angeordnet ist, aufweist, und
der erste Endteil (4i1) und der zweite Endteil (4i2) derart geneigt sind, dass sie von der Nicht-Lichtaufnahmefläche (2b) getrennt sind, während der erste Endteil (4i1) und der zweite Endteil (4i2) sich den beiden Enden nähern.

8. Das Solarzellenmodul (104) gemäß Anspruch 7, wobei ein Neigungswinkel des geneigten Teils (4c) in Bezug auf die Nicht-Lichtaufnahmefläche (2b) größer als ein Neigungswinkel des ersten Endteils (4i1) und des zweiten Endteils (4i2) in Bezug auf die Nicht-Lichtaufnahmefläche (2b) ist.

9. Das Solarzellenmodul (105) gemäß irgendeinem der Ansprüche 1 bis 8, wobei:
das Verstärkungselement (4) ferner einen ersten Flanschteil (4e1), der mit dem ersten Halteteil verbunden ist, und einen zweiten Flanschteil, der mit dem zweiten Halteteil verbunden ist, aufweist, und
der erste Flanschteil (4el) an einem Loch angebracht ist, das in dem ersten Halteteil ausgebildet ist, und der zweite Flanschteil an einem Loch angebracht ist, das in dem zweiten Halteteil ausgebildet ist.

## Revendications

1. Un module de cellules solaires (101, 102, 103, 104, 105, 106, 107, 108, 109), comprenant :
un panneau de cellules solaires (2) qui présente une surface réceptrice de lumière (2a) et une surface non-réceptrice de lumière (2b), qui est équivalente à une surface arrière de la surface réceptrice de lumière (2a), et comprend également une première partie latérale (2c1) et une deuxième partie latérale (2c2), qui sont disposées entre la surface réceptrice de lumière (2a) et la surface non-réceptrice de lumière (2b), et ne sont pas sur la même surface ;
un premier élément de retenue (31) qui retient la première partie latérale (2c1) du panneau de cellules solaires (2) ;
un deuxième élément de retenue (32) qui retient la deuxième partie latérale (2c2) du panneau de cellules solaires (2) ; et
un élément de renforcement (4) disposé entre le premier élément de retenue (31) et le second élément de retenue (32) du même côté que la surface non-réceptrice de lumière (2b), l'élément de renforcement (4) étant de forme allongée ; dans lequel
l'élément de renforcement (4) comprend une partie de support (4a) qui supporte la surface non-réceptrice de lumière (2b) du panneau de cellules solaires(2),
**caractérisé en ce que**
la partie de support (4a) comprend une partie horizontale (4b) parallèle à la surface non-réceptrice de lumière (2b) et comprend également une partie inclinée (4c) en forme de plaque plate disposée à une extrémité de la partie horizontale (4b), la partie inclinée (4c) étant inclinée de manière à être séparée de la surface non-réceptrice de lumière (2b) alors que la partie inclinée (4c) est séparée de la partie horizontale (4b), et
le module de cellules solaires (101, 102, 103, 104, 105, 106, 107, 108, 109) comprend en outre un adhésif (12) disposé entre la surface non-réceptrice de lumière (2b) et l'élément de renforcement (4), où
la partie de support (4a) supporte la surface non-réceptrice de lumière (2b) à travers l'adhésif (12), et
l'adhésif (12) est rempli entre la partie horizontale (4b) et la surface non-réceptrice de lumière (2b),
la partie de support (4a) comprend en outre une partie de liaison (4f) qui relie la partie horizontale (4b) et la partie inclinée (4c) ensemble,
l'adhésif (12) est également rempli entre la partie de liaison (4f) et la surface non-réceptrice de lumière (2b), et
l'adhésif (12) est également rempli entre la partie inclinée (4c) et la surface non-réceptrice de lumière (2b).

2. Le module de cellules solaires (101, 102, 103, 104, 105, 106, 107, 108, 109) selon la revendication 1, dans lequel la partie de liaison (4f) est incurvée de manière convexe vers la surface non-réceptrice de lumière (2b) et relie en continu la partie horizontale (4b) et la partie inclinée (4c) ensemble.

3. Le module de cellules solaires (101, 102, 103, 104, 105, 106, 107, 108, 109) selon l'une quelconque des revendications 1 ou 2, dans lequel une extrémité de la partie inclinée (4c) est positionnée à l'extérieur d'une extrémité de l'adhésif (12), dans une direction perpendiculaire à une direction longitudinale de l'élément de renforcement (4).

4. Le module de cellules solaires (102, 103) selon la revendication 1, dans lequel :
une épaisseur de la partie de liaison (4f) est inférieure à une épaisseur de la partie horizontale (4b).

5. Le module de cellules solaires (102) selon la revendication 4, dans lequel l'épaisseur de la partie de liaison (4f) est inférieure à une épaisseur de la partie inclinée (4c).

6. Le module de cellules solaires (103) selon l'une quelconque des revendications 1 à 5, dans lequel une épaisseur de la partie inclinée (4c) est inférieure à une épaisseur de la partie horizontale (4b).

7. Le module de cellules solaires (104) selon l'une quelconque des revendications 1 à 6, dans lequel :
la partie de support (4a) comprend en outre une première partie d'extrémité (4i1) située à une extrémité des deux extrémités de l'élément de renforcement (4) dans une direction longitudinale et une seconde partie d'extrémité (4i2) située à une autre extrémité des deux extrémités ; et
la première partie d'extrémité (4i1) et la deuxième partie d'extrémité (4i2) sont inclinées de manière à être séparées de la surface non-réceptrice de lumière (2b), alors que la première partie d'extrémité (4i1) et la deuxième partie d'extrémité (4i2) viennent près des deux extrémités.

8. Le module de cellules solaires (104) selon la revendication 7, dans lequel un angle d'inclinaison de la partie inclinée (4c) par rapport à la surface non-réceptrice de lumière (2b) est supérieur à un angle d'inclinaison de la première partie d'extrémité (4i1) et de la deuxième partie d'extrémité (4i2) par rapport à la surface non-réceptrice de lumière (2b).

9. Le module de cellules solaires (105) selon l'une quelconque des revendications 1 à 8, dans lequel :
l'élément de renforcement (4) comprend en outre une première partie de bride (4e1) qui est reliée à la première partie de retenue et une deuxième partie de bride qui est reliée à la deuxième partie de retenue ; et
la première partie de bride (4e1) est montée dans un trou formé dans la première partie de retenue, et la deuxième partie de bride est montée dans un trou formé dans la deuxième partie de retenue.
